# EUROPÄISCHE PATENTANMELDUNG

(11) **EP 2 960 846 A1**
(43) Veröffentlichungstag der Anmeldung: **30.12.2015**
(21) Anmeldenummer: 15173535.4
(22) Anmeldetag: 24.06.2015
(51) Int. Cl.: G06Q 20/32, G07F 7/08

(54) **UHR MIT ERWEITERTER FUNKTIONALITÄT ZUR ABSICHERUNG ELEKTRONISCHER TRANSAKTIONEN MIT SICHEREN ELEKTRONISCHEN SIGNATUREN**

(30) Priorität: 25.06.2014 DE 102014108911
(71) Anmelder: Papagrigoriou, Paschalis, 90482 Nürnberg (DE)
(72) Erfinder: Papagrigoriou, Paschalis, 90482 Nürnberg (DE)
(74) Vertreter: 2K Patentanwälte Blasberg Kewitz & Reichel

(57) **Zusammenfassung**

Uhr mit erweiterter Funktionalität für eine oder mehrere elektronische Transaktionen umfassend eine Anzeige, eine Tastatur, eine Netzwerkschnittstelle, eine Verarbeitungseinheit, einen Micro-Controller und einen Speicherbereich für Signaturinformationen und/oder Schlüsselmaterial, gekennzeichnet durch eine Einrichtung, die es der Chipkarte erlaubt, sich mit einem Wirtsystem über die Netzwerkschnittstelle zu verbinden, um sich gegenüber diesem Wirtsystem als integriertes Kartenlesegerät mit eingeschobener Chipkarte darzustellen, wobei die Transaktionsdaten zu der Chipkarte über die Netzwerkschnittstelle vom Wirtsystem empfangen werden, um auf dem Display dargestellt zu werden, um durch eine Tastatureingabe auf der Tastatur diese Transaktionsdaten bestätigen zu können, um diese Transaktionsdaten mit der Signatur zu versehen und um diese dann an den PC oder Smartphone zu senden.

## Beschreibung

Die Erfindung betrifft eine Uhr, vorzugsweise eine Armbanduhr, mit erweiterter Funktionalität zur signaturgestützten Absicherung elektronischer Transaktionen, die insbesondere von bankfachlichen Anwendungen auf persönlichen mobilen Endgeräten oder sonstigen Geld- oder Bezahlsystemen ausgeführt werden und die Integrität der digital signierten Informationen sowie die Identifikation des Urhebers dieser Informationen zweifelsfrei voraussetzen.

### [Gebiet der Erfindung]

Elektronische Signaturen kommen immer dann zum Einsatz, wenn es darum geht, den Ersteller oder Sender eines elektronischen Dokuments oder Datensatzes ohne Zweifel zu identifizieren und die Integrität der signierten elektronischen Informationen zu gewährleisten. Ein Beispiel für einen sicherheitskritischen Bereich, der im alltäglichen Leben zunehmend an Bedeutung gewinnt, sind bankfachliche Anwendungen wie Home-Banking oder Mobile-Banking sowie der Einsatz elektronischer Identitäten bei der Nutzung von Online-Diensten. Es ist unmittelbar einsichtig, was passieren könnte, wenn sich ein böswilliger Dritter als Inhaber eines Bankkontos ausgeben könnte, das ihm nicht gehört.

Mit dem Einsatz mobiler Systeme sowohl im privaten als auch im betrieblichen Bereich, wie auch im Bereich des Gesundheitswesens oder der öffentlichen Verwaltung vervielfältigen sich die Gefahren, die sich daraus ergeben, wenn die Integrität der übermittelten Informationen nicht garantiert werden kann, oder wenn die Identität des Erstellers nicht zweifelsfrei festgestellt werden kann.

Ein wichtiges Kriterium bei der Auswahl eines elektronischen Sicherheitsverfahrens ist neben den Kosten auch die Benutzerfreundlichkeit, da es besonders im privaten Bereich sehr schwierig sein dürfte, Akzeptanz für ein zwar sicheres aber aufwendiges Sicherheitsverfahren zu erwarten, sei es aus mangelndem technischen Verständnis, oder sei es wegen der Umständlichkeit des Verfahrens. Im Zusammenhang mit mobilen Endgeräten wird die Akzeptanz ohne Zweifel auch davon abhängen, ob zusätzliche Geräte (z.B. Kartenleser/Chipkartenlesegerät) mit oder ohne Verkabelung nötig sind. Bereits vorhandene und auf dem Markt befindliche Lösungen, die weiter unten unter "Stand der Technik" aufgeführt und beschrieben sind, sind deshalb nicht nur unter sicherheitsrelevanten Aspekten zu beurteilen, sondern auch was ihre Benutzerfreundlichkeit betrifft.

Die Anpassung der Sicherheitslösungen konnte bisher mit der rasanten Entwicklung im Bereich der mobilen Endgeräte (Smartphones, Tablets, etc.) nicht in angemessener Weise Schritt halten. So haben einige dieser Verfahren, die in Kombination mit mobilen Endgeräten angewendet werden könnten, in der Praxis für den Benutzer mehr oder weniger gravierende Nachteile hinsichtlich der Handhabbarkeit oder Bedienbarkeit, was sie für einen weitgestreuten Einsatz ungeeignet macht. Im Gegensatz dazu erfüllt die erfindungsgemäße Lösung die höchsten Sicherheitsanforderungen und kann dabei dennoch optimal und benutzerfreundlich mit mobilen Endgeräten verwendet werden.

### [Stand der Technik]

Die relevanten Verfahren, anhand derer der Stand der Technik im Folgenden beschrieben wird, kommen aus den Bereichen der Sicherheit im Zahlungsverkehr, der Online-Banking-Sicherheit und der Chiptechnologie. Allein die Anzahl der Sicherheitsverfahren im Internet, welche in den letzten zehn Jahren entwickelt wurden, zeigt, wie wichtig es ist, die Sicherheit und Zuverlässigkeit der Kommunikation im Internet zu gewährleisten. Verfahren, welche sich zur Sicherung einer Transaktion auf die Verwendung von TAN-Listen stützen, gelten mittlerweile nicht mehr als sicher und wurden von anderen Verfahren abgelöst.

Die Chipkarte steht nunmehr im Mittelpunkt aller ernst zu nehmenden Sicherheitsverfahren. Sie gilt technisch als sicherer Träger geheimer Schlüsselinformationen, sie ist immer beim Kunden (Besitzkomponente) und stellt zudem mittlerweile für jeden Nutzer ein wertvolles und sicheres Medium dar, auf welches er besonders achtet und dessen etwaigen Verlust er umgehend dem Herausgeber (z.B. seiner Bank) meldet. Somit kann beispielsweise ein Kreditinstitut immer darauf vertrauen, dass die Chipkarte bei seinem Kunden ist, und dass dieser tatsächlich die Person ist, die die Transaktionen ausführt, denn bei Verlust der Chipkarte würde dieser sofort gemeldet werden. Chipkarte ist auch der Oberbegriff für verschiedene Plastikkarten. Synonym zur Chipkarte wird auch der Begriff Smartcard verwendet. Letzterer wird in dieser Schrift ebenfalls benutzt, insbesondere wenn es um den Crypto-Micro-Controller einer Chipkarte geht, den eigentlichen Baustein für kryptographische Operationen. Eine Smartcard besitzt einen Micro-Controller mit Arbeitsspeicher, ein Betriebssystem, verschiedene Anwendungen je nach Anwendungsumfeld und Speicherplatz für die Anwendungsdaten, der in der Lage ist sensible Daten resistent geben Angriffen zu speichern. Smartcards kommen in diversen Formen vor; als Bauelement auf eine Leiterplatte, in das Plastikgehäuse in Kreditkarten-Format (ID1) oder SIM-Kartenformat (ID000). Je nach Formfaktor können die Smartcards kontaktbehaftet oder kontaktlos mit ihrer Umgebung kommunizieren. Für diese Schrift ist die Chipkarte bzw. die Smartcard hauptsächlich im Formfaktor bzw. in das Gehäuse einer Uhr und insbesondere einer Armbanduhr zu sehen. Diese Armbanduhr, weist eine Gehäuse mit entsprechenden Formfaktor auf und ein Armband, das am Gehäuse befestigt ist.

Noch heute wird häufig für die Nutzung einer TAN (Transaktionsnummer) in einer Transaktion ein sogenannter TAN-Generator verwendet. Dafür hat der Nutzer ein externes Gerät, an das keine besonderen Anforderungen hinsichtlich Sicherheit gestellt werden müssen, sowie seine persönliche Chipkarte.

Mehr Sicherheit sollte in der zweiten Hälfte des letzten Jahrzehntes das sogenannte indizierte TAN-Verfahren (iTAN-Verfahren) bringen. Hierbei handelt es sich um eine Bestätigung der Rückfrage eines Kreditinstitutes, bei der der Bankkunde eine bestimmte TAN aus einer Liste auszuwählen hat. Somit spricht man von einem "Zwei-Schritt-Verfahren", bei dem nicht die Transaktion selbst, sondern die Rückfrage des Kreditinstitutes mit einer explizit angeforderten TAN bestätigt wird. Auch bei diesem Verfahren haben sich große Schwächen gezeigt, denn weder der Benutzer kann feststellen, an wen er die Daten übergibt, noch das Kreditinstitut, ob die Daten tatsächlich von seinem Kunden oder einem unbekannten Angreifer kommen.

Schnell wurden die Möglichkeiten des "Zwei-Schritt-Verfahrens" erkannt und weitere Sicherheitsverfahren darauf aufbauend entwickelt, die für den "zweiten Schritt" einen völlig anderen Kommunikationskanal verwenden. Im Rahmen des weiterentwickelten Zwei-Schritt-Verfahrens werden Daten, die von einem Server stammen, außerhalb des stationären oder mobilen Endgeräts (z.B. PC oder Smartphone), mit dem Transaktionen abgewickelt werden, dem Benutzer auf dem Display eines externen Chipkartenlesers angezeigt. Die Übertragung dieser Daten erfolgt an der Bildschirmoberfläche des PCs oder Smartphones über optische Detektoren des externen Chipkartenlesers, welcher einen flackernden Code aufnimmt (künftig auch akustisch möglich). Nachdem der Nutzer eine Reihe von Daten (Kontonummer, Betrag etc.) einzeln bestätigt hat, wird eine TAN mit Hilfe der Chipkarte des Kunden auf diesem Chipkartenleser und somit ebenfalls außerhalb des PCs oder Smartphones berechnet. Die mit Hilfe der Chipkarte des Benutzers auf diesem Gerät generierte und auf seinem externen Display angezeigte TAN muss dann explizit vom Benutzer auf die Anwendungsumgebung des Bankings (web- oder clientbasiert) übertragen werden. Der Vorgang ist als chipTAN-Verfahren bekannt.

Zu den Nachteilen des Verfahrens zählen die manuelle Übertragung der Transaktionsnummer (TAN) durch den Nutzer, die unpraktische Verwendung eines Zusatzgerätes durch den Nutzer, die unkomfortable Nutzung in Kombination mit Smartphones und die reduzierte Informationsanzeige und Informationsbestätigung bei Sammelüberweisungen.

Parallel zum chipTAN-Verfahren gehört auch das mTAN-Verfahren (auch SMS-TAN-Verfahren genannt) zum Stand der Technik. Auch hier handelt es sich um ein Zwei-Schritt-Verfahren. Der Nutzer hinterlegt bei seiner Bank vorab seine Handy-Nummer. Während einer Banktransaktion wird dem Nutzer eine SMS zugestellt, welche eine gültige TAN enthält. Der Nutzer muss diese dann im Rahmen seiner aktuellen Session mit der Bank übertragen. Angriffe über Handy-Trojaner zeigen, dass auch dieses Verfahren nicht sicher ist. Die Verbreitung solcher Trojaner steht uns noch bevor.

Im Rahmen der einsetzbaren Verfahren im bankfachlichen Bereich sei hier auch die Secoder-Spezifikation [1] erwähnt, welche im Gegensatz zu den bisher vorgestellten Verfahren auch Implementierungsmöglichkeiten auf Basis des sogenannten "Ein-Schritt-Verfahrens" bietet. In der Secoder-Spezifikation wird ein multifunktionaler IC Card Reader (Chipkartenleser) mit Display und Tastatur definiert. Seine Funktionalität ist durch eine Menge von Befehlen beschrieben, die innerhalb dieses Chipkartenlesers auf seiner eigenen CPU ausführbar sind. Besonders wichtig am Secoder ist einerseits die Verwendung einer für den Benutzer vertrauenswürdigen Ein- und Ausgabeeinheit, welche die Authentizität und Integrität der Daten garantiert, und andererseits die Nutzung des "Ein-Schritt-Verfahrens", bei dem die Auftrags- bzw. Transaktionsdaten zuerst lokal durch den Benutzer im Banking-Client eingegeben werden, und, bevor diese dann in einem Schritt an den Bankserver übermittelt werden, auf einem Secoder-Chipkartenleser extern bestätigt und signiert werden.

Chipkartenleser sind Geräte, die Chipkarten ansteuern. Dabei werden nicht nur Daten gelesen, sondern auch geschrieben, oder Applikationen auf der Chipkarte angesteuert; daher spricht man auch von einem Chipkartenterminal [4]. Es gibt vier Sicherheitsklassen für Chipkartenleser, die bei der DK (Deutsche Kreditwirtschaft) spezifiziert wurden. Sicherheitsklasse 1 und 2 sind für ein ernsthaftes Sicherheitsniveau uninteressant. Chipkartenleser der Sicherheitsklasse 3 besitzen ein Display und eine Tastatur sowie Zusatzfunktionen, mit denen das Bezahlen mit der Geldkarte im Internet möglich ist. Chipkartenleser der Sicherheitsklasse 4 verfügen zusätzlich zu den Merkmalen der Klasse 3 auch über eine eigene manipulationssichere Identität. Dies wird mit einer zusätzlichen Chipkarte möglich. Wird ein Chipkartenleser mit einem PC über USB oder eine serielle Schnittstelle verbunden, so wird dieser über proprietäre oder standardisierte Software-Schnittstellen erkannt und kann mit einer Anwendung kommunizieren. Als Standard für solche Schnittstellen gilt heute PC/SC [5], wofür es sowohl Windows- als auch Linux-Implementierungen gibt. Die Secoder-Spezifikation [1] geht über die Merkmale der Sicherheitsklasse 3 hinaus. Ein nach dieser Spezifikation gebauter Chipkartenleser enthält eine Firewall, welche vor möglichen Manipulationen schützt, während das Gerät mit dem Nutzer über Display und Tastatur interagiert (z.B. PIN-Eingabe) oder Daten für den Signaturvorgang mit einer Chipkarte verarbeitet.

Des Weiteren sind beim Smartphone mit einem Blackberry- oder Android-OS Lösungen mit Chipkarten in speziellen Formfaktoren (z.B. microSD mit integrierter Chipkarte) denkbar. Da es jedoch in so einem Fall keine unabhängige sichere Einund Ausgabemöglichkeit gibt, können erhöhte Sicherheitsanforderungen kaum erfüllt werden, so dass sich eine nähere Betrachtung an dieser Stelle erübrigt.

Es wird erwartet, dass nahezu alle künftigen Smartphones mit gewissen Einschränkungen Bluetooth- [2] und NFC-fähig [3] sind. Es gibt Geräte, wie z.B. das iPhone, die Stand heute keine integrierte NFC-Schnittstelle aufweisen. In solchen Fällen kann für die Kommunikation mit einer Chipkarte über einen Chipkartenleser ein dafür verfügbares externes Zubehör verwendet werden oder ein anderes Kommunikationsprotokoll eingesetzt werden. Eine Möglichkeit für letzteres bietet der Bluetooth-Standard.

Diese drahtlosen Schnittstellen schaffen die Voraussetzungen, um z.B. auch Chipkartenleser kabellos mit einem PC oder Smartphone verbinden zu können. Erste solche Chipkartenleser sind bereits auf dem Markt. Sollte heute ein Chipkartenleser nach dem Secoder-Standard [1] in Zusammenspiel mit einem mobilen Gerät verwendet werden, so müsste Stand heute Zusatzverkabelung vorgenommen werden, ggf. Umkonfigurierung des Smartphones und Installation von Zusatzsoftware erfolgen, falls dies überhaupt auf einem marktüblichen Mobilegerät machbar ist. Alternativ müssten solche Chipkartenleser auf kabellose Kommunikation umgestellt werden, was zumindest heute bereits technisch machbar wäre. Beispielsweise ist dies bei einigen wenigen marktüblichen Chipkartenlesern über Bluetooth realisiert.

Die Integration eines Displays und einer in der Regel numerischen Tastatur direkt auf einer nach ISO 7810, ID-1 physikalisch dimensionierten Chipkarte gehört ebenfalls zum Stand der Technik. Solche Chipkarten werden heute lediglich im Authentifizierungsbereich für die Verfahren "one-time-password" bzw. "challengeresponse" eingesetzt.

Für eine Erhöhung der Sicherheit sorgt auch das Verfahren mit der Patentnummer DE 10 2008 007 367 B4 2010.09.30. Basierend auf dem Zwei-Schritt-Verfahren werden Daten, die von einem Server stammen, unabhängig von dem PC, auf dem die Transaktion abgewickelt wird, sicher auf einem Display angezeigt und durch den Benutzer bestätigt. Die Vorrichtung kommuniziert nicht mit dem angebundenen Host als Kartenleser, sondern verwendet diesen als Gateway, um mit einem Server zu kommunizieren, Daten von dort zu bekommen und diese signiert zu diesem Server zurück zu senden. Eine weitere Ausführungsform des Verfahrens besteht darin, dass ebenfalls eine TAN in sicherer Umgebung mit der Chipkarte erzeugt und angezeigt wird, ähnlich wie beim ChipTAN- oder mTAN-Verfahren.

Die EP 1855 231 weist eine Datenspeicherkarte mit mehreren Schnittstellen auf. Es handelt sich um eine Vorrichtung ohne Tastatur und Display. Über eine der Schnittstellen kann die Vorrichtung (bedingt) als ID1-Karte in Chipkartenlesern verwenden werden, über weitere Schnittstellen kann diese Vorrichtung Daten empfangen auf einen Flashspeicher speichern.

Die US 2012/0154290 zeigt eine Smartcard mit integriertem Display und Tastatur. Es handelt sich hier um eine reine Chipkarte (auch Display-Karte genannt). Die Tastatur dient zur Eingabe der Karten-PIN für die Erzeugung von Einmal-Codes in einem Challenge-Response-Verfahren. Der Benutzer sieht auf dem Display diesen Code und überträgt ihn auf ein anderes Gerät, das auf diese Response wartet.

Das Dokument US 8,244,181 B2 beschäftigt sich mit der sicheren Speicherung und Bereitstellung von Daten, die notwendig für die Konnektivität eines mobilen Geräten an einem Mobilfunknetz sind. Diese Daten werden auf eine SIM-Karte innerhalb eines persönlichen Artikels (z.B. Schmuckstück, Armbanduhr) gehalten und über NFC auf verschiedene Mobilgeräte, PDA etc. übertragen, so dass der Benutzer nicht immer die SIM-Karte aus dem einen Mobilgeräte herausnehmen muss und sie in einem anderen wieder einführen muss. Diese Schrift tangiert die erfindungsgemäße Vorrichtung weder im Bereich der Ein-/Ausgabeeinheit noch in der Nutzung der Vorrichtung als Chipkartenleser und Smartcard für einen Signaturvorgang.

Heutige Implementierungen und Stand der Technik im Bereich Armbanduhr in Kombination mit Smartcard und/oder NFC sind schwerpunktmäßig Token-Systeme, die als NFC-Tag an einem externen Chipkartenleser gelesen werden, One-Time-Password-Generatoren oder selbst Chipkartenleser der Klasse 1 (ohne Display und Tastatur-Einheit.

Erstmal in der DE 10 2012 108 645 A1 wird ein sicheres und vertrauenswürdiges Signieren von Daten im "Ein-Schritt-Verfahren" für eine Transaktion ermöglicht, bei dem ein Konstruktion verwendet wird, die sowohl Chipkarte nach dem ID1-Standard als auch Kartenlesegerät ist. Das führt zur Vermeidung der Anschaffung und des Einsatzes von aufwendigen Chipkartenlesern.

### [Aufgabe]

Ziel der vorliegenden Erfindung ist die Nachteile aus dem Stand der Technik zu umgehen und Ergänzungen im Sinne der Sicherheit und der Praktikabilität einzuführen.

Vorteilhaft ist die vorliegende erfindungsgemäße Vorrichtung auch, um die im Dokument DE 10 2012 108 645 A1 ausgeführte Erfindung effizienter umzusetzen und die Vorteile dieser Erfindung schnellstens durch marktverfügbare Produkte bereitstellen zu können. Die in DE 10 2012 108 645 A1 verwendeten Technologien für Display, Eingabeeinheit, Charger, Battery etc. und je nach Ausführung auch umfängliche NFC-Schnittstellen können im Formfaktor einer Uhr und vorzugsweise einer Armbanduhr sehr leicht mit vorhandenen Komponenten kostengünstiger eingekauft und integriert werden. Die Entwicklungen der Smart Watch-Komponenten der beiden letzten Jahre bilden hierfür eine sehr gute Basis. Die erfindungsgemäße Uhr erfordert ferner kein flexibles Display, so dass auch so eine Strapazierfähigkeit vorausgesetzt werden kann. Die erfindungsgemäße Uhr kann somit auch für andere Tagestätigkeiten getragen und verwendet werden (z.B. beim Sport). Der vorhandene Raum innerhalb der erfindungsgemäßen Uhr kann schließlich für die Aufnahme einer leistungsfähigeren Energiequelle verwendet werden. Somit entsteht nicht nur eine längere Nutzung der erfindungsgemäßen Vorrichtung als Uhr, sondern auch ihr Einsatz für die eigentlichen Anwendungsbereiche der sicheren elektronischen Signatur und Absicherung elektronischer Transaktionen.

### [Beschreibung der Erfindung und der Ausführungsformen]

Die vorliegende Erfindung betrifft eine Vorrichtung und ein Verfahren. Die Hauptaufgabe der Vorrichtung der vorliegenden Erfindung ist, mit einer einzigen Konstruktion aus vereinigten Sicherheitsmerkmalen und Sicherheitskomponenten die Ausführung von Sicherheitsfunktionen einer Chipkarte bzw. eines marktüblichen Smartcard-Controllers eingebettet in einer Uhr und die eines marktüblichen Chipkartenlesers [5] bei gleichzeitiger Erfüllung von strengen Sicherheitsanforderungen hinsichtlich der vertrauenswürdigen Anzeige und Eingabe oder Bestätigung von Transaktionsdaten, folgend beispielsweise dem Secoder-Prinzip der Deutschen Kreditwirtschaft [1], zu ermöglichen. Selbstverständlich kann die Vorrichtung ihre Funktionen auch einzeln oder teilweise ausführen. So kann die erfindungsgemäße Uhr und vorzugsweise als Armbanduhr auch nur als Chipkarte arbeiten (z.B. kontaktlos oder auch kontaktbehaftet) oder in anderen Fällen auch als Chipkarte mit integriertem Chipkartenleser, der nicht notwendigerweise die hohen Sicherheitsanforderungen hinsichtlich einer vertrauenswürdigen Ein- und Ausgabeeinheit zu erfüllen braucht oder diese nur teilweise benötigt, wie beispielsweise nur für eine sichere PIN-Eingabe.

Ziel dieser Erfindung ist, den sicherheitskritischen Anwendungen in Terminalumgebungen, wie den PC, den Kassen- und Geldautomaten oder anderen Bezahlterminals, aber vor allem in der stark wachsenden Welt der Smartphones und Tablets-PC, mit nur einem einzigen Zusatzgerät in Form einer Uhr bzw. Armbanduhr das hohe Sicherheitsniveau einer Chipkarte unter Verwendung eines integrierten Chipkartenlesegerätes mit vertrauenswürdiger Anzeige- und Tastatureinheit für alle wichtigen Sicherheitsoperationen bereitzustellen.

Bei der erfindungsgemäßen Vorrichtung handelt es sich um eine Uhr, vorzugsweise in der Bauform einer Armbanduhr, andere übliche Bauformen von Uhren wie Taschenuhr, Uhr an der Halskette etc. sind gleichermaßen möglich - , welche nicht nur die kryptographischen Funktionen des Crypto-Micro-Controllers z.B. für digitale Signaturen bereitstellt, sondern zusätzlich die Funktionen eines Chipkartenlesers bietet. Zudem enthält sie eine vertrauenswürdige Anzeige- und Tastatureinheit, und ermöglicht aufgrund der ebenfalls integrierten NFC- und/oder Bluetooth-Funktionalität eine kabellose Kommunikation mit modernen mobilen Endgeräten wie Smartphones oder Tablets, aber auch mit PCs oder Bezahlterminals. Damit erfüllt die Vorrichtung alle Voraussetzungen für eine gute Akzeptanz durch die potentiellen Nutzer, da sie Sicherheit nach dem letzten Stand der Technik (Chipkarte und mindestens Chipkartenleser der Sicherheitsklasse 3) mit komfortabler Bedienbarkeit vereint, optimal mit modernen mobilen Endgeräten kommuniziert, dabei als persönliches Gerät (z.B. als Armbanduhr) getragen und genutzt werden kann, und zudem hohe Kosten für teure Chipkartenleser einspart.

### Figurenbeschreibung:

Im Folgenden werden Figuren kurz beschrieben:
Figur 1. mit der Nutzersicht der erfindungsgemäßen Vorrichtung
Figur 2. mit der technischen Anordnung der erfindungsgemäßen Vorrichtung
Figur 3a. mit der Ausführungsform: die Netzwerkschnittstelle ist auf NFC-Basis realisiert.
Figur 3b. mit der Ausführungsform: die Netzwerkschnittstelle ist auf NFC-Basis realisiert. Die Vorrichtung enthält keine Energiequelle.

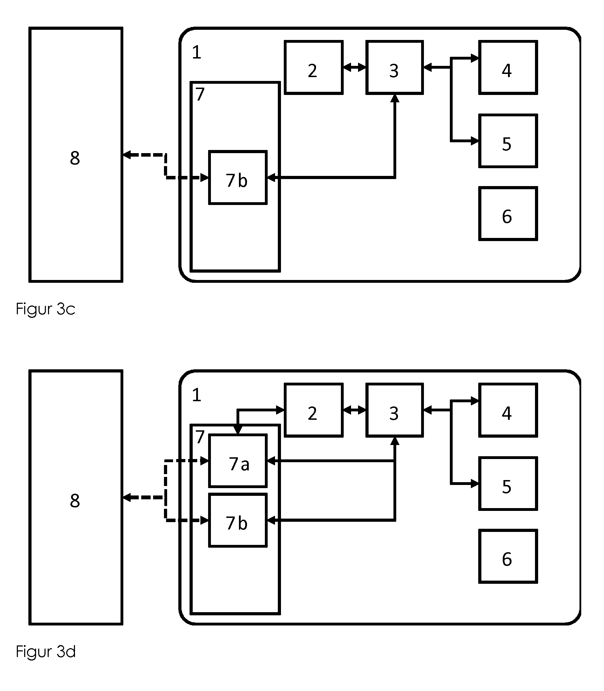

Figur 3c. mit der Ausführungsform: die Netzwerkschnittstelle ist auf Bluetooth-Basis realisiert.
Figur 3d. mit der Ausführungsform: es ist sowohl eine Netzwerkschnittstelle auf Bluetooth-Basis als auch eine auf NFC-Basis vorhanden.
Figur 4. mit einer Kurzbeschreibung des erfindungsgemäßen Verfahrens Detaillierte Beschreibung der Figuren:

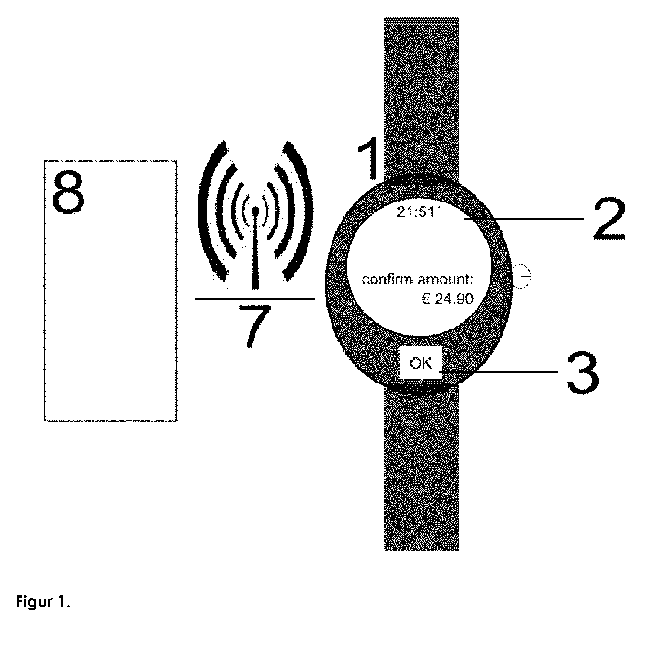

Im Aufbau einer Uhr (bevorzugt als Armbanduhr) [Fig. 1, Ziffer 1] vereint die erfindungsgemäße Vorrichtung neben der Anzeige von Zeit- und Kalenderdaten über eine Anzeigeeinheit [siehe Fig. 1, Ziffer 2] gleichzeitig wichtige Funktionen eines Chipkartenlesers und einer Chipkarte. Für den Nutzer sichtbar sind zwar nicht die typischen goldenen Kontaktflächen einer Chipkarte, aber dafür ihre Funktion während des Einsatzes über eine Anzeigeeinheit [siehe Fig. 1, Ziffer 2] für vertrauenswürdige Ein- und Ausgaben und eine Eingabeeinheit. Die Eingabeeinheit kann durch physikalische Tasten, Sensoren mit Direct-Pad-Technologie (D-pad) [siehe Fig.1, Ziffer 3] oder ein Touch Panel, das auch die Anzeigeeinheit integriert, implementiert werden. Die erfindungsgemäße Vorrichtung kommuniziert als Chipkartenleser mit integrierter Chipkarte dabei über ihre drahtlose [siehe Fig.1, Ziffer 7] oder drahtgebundene (z.B. USB) Netzwerkschnittstelle(n) mit einem Wirksystem [siehe Fig.1, Ziffer 8]. Ferner ist ein Wirtsystem 8 mit einer sicherheitskritischen Anwendung notwendig, die für ihre Transaktionsabsicherung eine Chipkarte voraussetzt. Das Wirtsystem kann ein klassischer PC (Windows, LINUX), ein Smartphone oder Tablet-PC (iPhone, Android, WindowsPhone7, Blackberry/10 etc.), sowie heutige Kassensysteme, Geldautomaten oder Bezahlterminals sein.

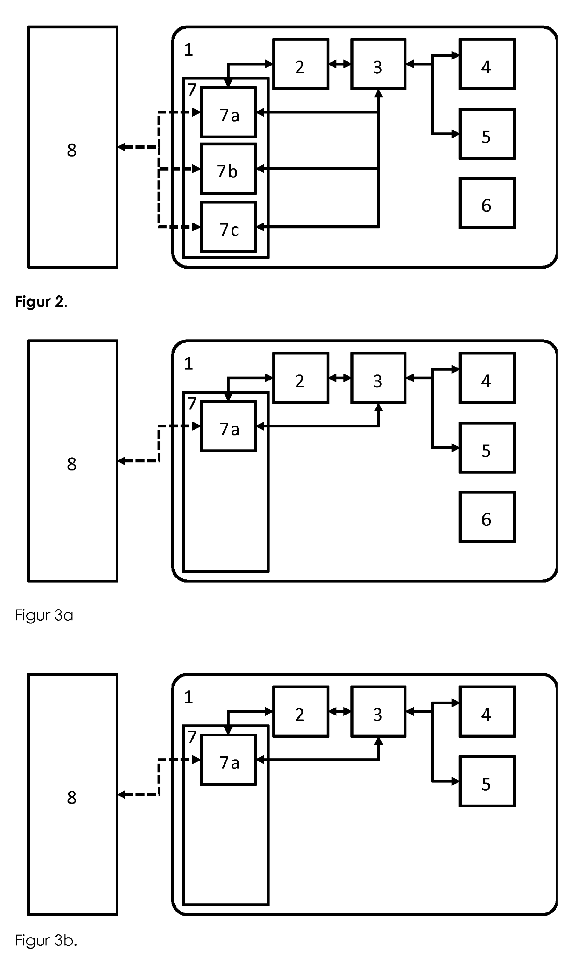

Der Crypto-Micro-Controller 2 der Figur 2 ist eine vollwertige Prozessor-Chipkarte mit kryptographischen Fähigkeiten. Die erfindungsgemäße Vorrichtung kann mehrere dieser Chipkarten-Elemente haben. Ferner ist eine zentrale Verarbeitungseinheit, CPU, 3 vorhanden, die die Verarbeitung vornimmt. Auf der Display-Einheit 4 werden manipulationssicher die Transaktionsdetails angezeigt. Die Tastatur-Einheit 5 dient zur Eingabe von Daten durch den Nutzer, insbesondere von PINs. Die Tastatur kann durch physikalische Tasten oder durch einen Touchscreen implementiert werden. Eine Energiequelle 6 (falls erforderlich; z.B. wenn Bluetooth im Einsatz) wird zur Stromversorgung der Einheit bereitgestellt. Diese kann extern über USB oder NFC oder auch als Solarmodul aufladbar sein. Die Netzwerkschnittstelle(n) (7a, 7b, 7c), dienen zur Kommunikation. Die erfindungsgemäße Vorrichtung enthält mindestens eine Netzwerkschnittstelle. Diese kann aus heutiger Sicht nach der NFC- 7a oder der Bluetooth-Technologie 7b oder auch einer anderen drahtgebundenen oder drahtlosen Technologie 7c, wie USB, wireless-USB oder WLAN etc. realisiert sein. Im Falle einer NFC-Schnittstelle kann der NFC-Baustein auch direkt mit einem der Crypto-Micro-Controller der Vorrichtung verbunden sein. Alternativ kann die Vorrichtung auch einen Crypto-Micro-Controller mit integrierter NFC-Funktionalität haben. Ferner ist ein Wirtsystem 8 mit einer sicherheitskritischen Anwendung notwendig, die für ihre Transaktionsabsicherung eine Chipkarte voraussetzt. Das Wirtsystem kann ein klassischer PC (Windows, LINUX), ein Smartphone oder Tablet-PC (iPhone, Android, WindowsPhone7, Blackberry/10 etc.), sowie heutige Kassensysteme, Geldautomaten oder Bezahlterminals sein.

Die erfindungsgemäße Vorrichtung mit der integrierten NFC-Funktionalität 7a macht es möglich, diese in allen bei NFC definierten und standardisierten Modi zu verwenden. Diese sind "Card Emulation" (Rolle einer Chipkarte), "Read/Write" (Rolle eines Chipkartenlesers) und "Peer-2-Peer" (gleichberechtigte aktive Kommunikationseinheit für den Datenaustausch).

Als erstes soll der Fall "Card Emulation" erläutert werden. Im Fokus dieser Erfindung stehen Anwendungen, die auf einem Wirtsystem 8 laufen und den Einsatz einer Chipkarte voraussetzen. Solche Anwendungen können Home-, Mobile- oder Online Banking-Applikationen sein, aber auch VPN-Clients und auch Email-Clients, welche vom Nutzer erwarten, dass er seine Chipkarte für Authentifizierungszwecke oder elektronische Signaturen einsetzt. Wenn nun die erfindungsgemäße Vorrichtung mit solchen Anwendungen genutzt werden soll, und diese auf NFC-fähigen Endgeräten bzw. Wirtsystemen 8 laufen (z.B. Android-Smartphones oder - Tablets), so übernimmt die erfindungsgemäße Vorrichtung gegenüber dem Wirtsystem 8 im Falle "Card-Emulation" die Rolle einer Chipkarte. Das Wirtsystem 8 kann auch ein PC sein, der bereits einen externen oder integrierten NFC-fähigen Chipkartenleser hat. D.h. das Wirtsystem 8 ist im NFC-Sinne der Chipkartenleser und die erfindungsgemäße Vorrichtung im Modus "Card-Emulation" die Chipkarte. Kommt die Kopplung dieser zwei Geräte zu Stande, so wird diese Kommunikationsverbindung rein für die Datenübertragung verwendet. In der Regel verwendet eine Anwendung die jeweiligen Gerätetreiber eines Chipkartenlesers mittelbar oder unmittelbar, um über diese an die angeschlossene Chipkarte zu gelangen. Solche Gerätetreiber sind grundsätzlich entweder vorinstalliert oder müssen nachträglich im Wirtsystem installiert werden. Im Falle der erfindungsgemäßen Vorrichtung, die ebenfalls einen Chipkartenleser enthält, welcher im Rahmen der erfindungsgemäßen Verfahren verwendet werden soll, besteht die Aufgabe darin, den vorhandenen vorgeschalteten NFC-Chipkartenleser des Wirtsystems (extern oder integriert) zu umgehen. Für ein hohes Niveau an Sicherheit werden von der Anwendung grundsätzlich nicht nur reine Chipkartenbefehle gesendet, sondern auch solche, die sowohl Chipkartenleser und Chipkarte betreffen, oder solche nur für Chipkartenleser. Zum einen würden Befehle zur Verwendung einer Anzeige oder einer Tastatur an einen Chipkartenleser ohne Display und Tastatur nichts nutzen. Zum anderen würde der vorgeschaltete NFC-Chipkartenleser solche Befehle höchstens ignorieren oder abweisen. Die Aufgabe kann gelöst werden, indem über die Anwendung oder auch mittelbar über eine zwischengeschaltete Zusatzsoftware spezielle Chipkartenbefehle an die Chipkarte (Crypto-Micro-Controller 2) adressiert werden. Eine ähnliche Methode findet in heutigen Chipkartenlesern nach der Secoder-Spezifikation statt. Der an einem PC üblicherweise über USB angeschlossene Secoder-Chipkartenleser wird zwar von diesem PC als USB-Gerät erkannt, die installierten Standard-PC-Gerätetreiber (PC/SC) wissen jedoch nicht unbedingt, dass es sich um einen Secoder-Chipkartenleser handeln kann. Da aber die sicherheitsrelevante Anwendung auf dem PC nur mit einem Secoder-Chipkartenleser und einer Chipkarte, die in einem solchen Chipkartenleser steckt, kommunizieren darf, übernimmt sie die Aufgabe, die Befehle für den Chipkartenleser mit Hilfe von Chipkartenbefehlen in Form von Daten abzusetzen. Der vorgeschaltete Chipkartenleser des Wirtsystems erkennt anhand des empfangenen Befehls, dass dieser für die Chipkarte adressiert ist und leitet diese ordnungsgemäß an die gekoppelte Chipkarte (erfindungsgemäße Vorrichtung im "Card-Emulation"-Modus) zur Verarbeitung weiter. Die gekoppelte erfindungsgemäße Vorrichtung befindet sich im NFC-Modus "Card-Emulation" und empfängt solche Befehle. Die CPU 3 der erfindungsgemäßen Vorrichtung kann diese als Chipkartenleserbefehle erkennen, interpretieren und ausführen. In der Regel handelt sich hierbei um Daten, die ein Chipkartenleser mit besonderen Anforderungen zuerst dem Nutzer auf dem vertrauenswürdigen Display anzeigt, diese vom Nutzer mit Hilfe der Tastatur bestätigen lässt, und sie dann mit Hilfe des Crypto-Micro-Controllers 2 signieren lässt. In der Folge gelangen diese signierten Daten als Antwort zurück zur Anwendung im Wirtsystem. Zuerst wird durch die CPU 3 der Vorrichtung die Antwort bzw. das Ergebnis eines ausgeführten Chipkartenbefehls vorbereitet und dann an den Chipkartenleser des Wirtsystems übergeben, welcher wiederum diese Daten der Anwendung über die Gerätetreiber zur Verfügung stellt. Die Anwendung kann durchaus auch Chipkartenbefehle senden, welche nicht nur für den Chipkartenleser der Vorrichtung gedacht sind. In einem solchen Fall wird der Befehl mit den Daten an die Chipkarte oder, konkret gesagt, an den Crypto-Micro-Controller 2 der erfindungsgemäßen Vorrichtung weitergeleitet und dort ordnungsgemäß ausgeführt. Das Ergebnis dieser Operation empfängt zuerst die CPU 3, die es entsprechend über die Kommunikationsschnittstelle an das Wirtsystem weiterleitet. Wie oben beschrieben, stehen die Daten anschließend für die Anwendung bereit.

Die anderen NFC-Modi sind je nach Einsatzszenario ebenfalls denkbar. Beispielsweise kann der Peer2Peer-Modus im Rahmen eines Software-Updates der Vorrichtung zum Einsatz kommen. Ist die erfindungsgemäße Vorrichtung im NFC-Read/Write-Modus eingestellt, d.h. die Vorrichtung hat die Rolle eines Chipkartenlesers, so ist es möglich, die erfindungsgemäße Vorrichtung nicht nur mit einem PC kontaktlos zu verwenden, sondern auch mit einer anderen kontaktlosen ID-Karte, Smartcard/Chipkarte. Letztere kann sowohl eine echte ISO-Chipkarte (z.B. Bankkarte) oder ein neuer Personalausweis (nPA) sein als auch eine Chipkarte/Smartcard als NFC-"card emulation", wie z.B. ein weiteres NFC-fähiges Android-Smartphone, das sich wie eine Chipkarte verhält (d.h. im NFC-Mode cord-emulation arbeitet). In diesem Fall wird beispielsweise das Smartphone als Wirtsystem 8 mit der erfindungsgemäße Vorrichtung verbunden, die sich dann gegenüber diesem Wirtsystem 8 als Chipkartenleser ausgibt. Einer der in der erfindungsgemäßen Vorrichtung enthaltenen Crypto-Micro-Controller 2 kann in diesem Szenario die erfindungsgemäße Vorrichtung auch zu einem Chipkartenleser der Sicherheitsklasse 4 machen.

Welchen Modus die erfindungsgemäße Vorrichtung einnehmen soll oder über welche Netzwerkschnittstelle diese verbunden werden soll, kann vom Nutzer an dieser voreingestellt werden oder nach dem Einschalten über die Tastatur eingestellt werden, oder die Vorrichtung soll, wenn möglich, das passende Kommunikationsprotokoll oder den richtigen NFC-Modus selbst erkennen.

Kommuniziert die erfindungsgemäße Vorrichtung nach außen mit einem Wirtsystem **8** über den Bluetooth-Standard **7b,** so wird diese vom Wirtsystem, ggf. mit Hilfe zusätzlicher Treiber-Software auf dem Wirtsystem, als vollwertiger Chipkartenleser erkannt. Als Chipkarte oder Smartcard kommt in diesem Szenario die in der Vorrichtung integrierte Chipkarte bzw. der Crypto-Micro-Controller **2** zum Einsatz. In der Regel, wie beim Bluetooth-Standard üblich, sind beide Geräte gepaart oder müssen noch standard-konform gekoppelt werden. Über diese Kommunikationsschnittstelle zeigt die erfindungskonforme Vorrichtung dem Wirtsystem 8 an, dass sie ein Standard-Chipkartenleser (ebenfalls standard-konform) sei. Die Erkennung des Chipkartenlesers erfolgt entweder über die im Wirtsystem vorinstallierten Gerätetreiber (PC/SC) oder ggf. über nachträglich auf dem Wirtsystem zu installierenden Treibern, soweit dies möglich ist. Die Information, dass ein Chipkartenleser an dem Wirtsystem angeschlossen ist, steht im Normalfall jeder Anwendung, die eine Chipkarte benötigt, zur Verfügung, denn es handelt sich aus der Sicht des Wirtsystems um einen Standard-Chipkartenleser.

Die in der erfindungsgemäßen Vorrichtung integrierte CPU **3** schafft die Voraussetzungen für die Ausführung von Programmcode, mit dessen Hilfe bestimmte Verfahren und Algorithmen zur Steuerung der gesamten sicheren Umgebung unter Berücksichtig der Ein- und Ausgabe-Einheiten implementiert werden. Anwendungsszenarien hierfür sind Geschäftsvorfälle und Transaktionen, welche eine Anwendung auf einem Wirtsystem steuert oder ausführt, die eine an diesem Wirtsystem angebundene Chipkarte für das sichere Signieren von Daten erwartet. Je nach Anwendungsgebiet ist es somit möglich, auf der CPU 3 der erfindungsgemäßen Vorrichtung mehrere spezielle Anwendungen laufen zu lassen, welche die Fähigkeiten der gesamten Vorrichtung nutzen können. Diese können vorinstalliert sein oder nachgeladen werden. Damit kann die erfindungsgemäße Vorrichtung mit ihrem Verfahren zusätzlich und ohne Aufwand durch den Nutzer auch für mehrere Anwendungsgebiete zum Einsatz kommen.

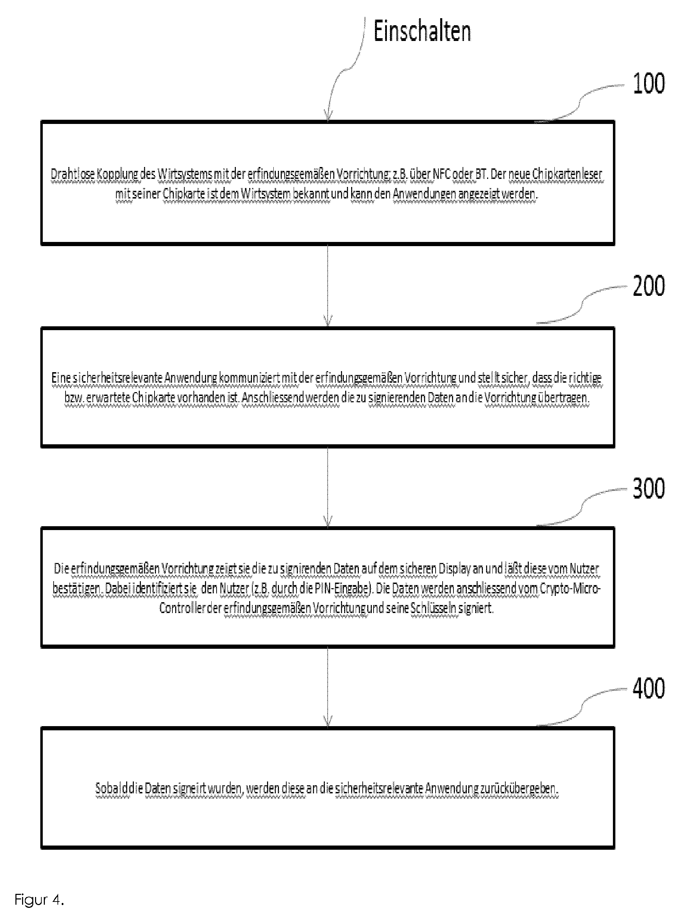

Die Fig. 4 zeigt die vier Schritte des erfindungsgemäßen Verfahrens. Beginnend mit Schritt 100 erfolgt das drahtlose Koppeln zwischen Wirtsystem und erfindungsgemäßer Vorrichtung. Mit Schritt 200 werden die zu signierenden Transaktionsdaten der erfindungsgemäßen Vorrichtung übergeben. Das erneute Anzeigen dieser Daten, deren Bestätigung durch den Nutzer über die Tastatur und deren Signatur erfolgen in Schritt 300. Mit Schritt 400 werden die signierten Daten zurück an das Wirtsystem übertragen. Im Folgenden werden die vier Schritte des Verfahrens detaillierter beschrieben.

Der erste Schritt 100 des erfindungsgemäßen Verfahrens basierend vorzugsweise auf der o.g. Vorrichtung ist, dass die erfindungsgemäße Vorrichtung (z.B. über NFC oder Bluetooth) mit einem Wirtsystem (PC, Smartphone, Kassen-, Geldautomat oder einem anderen Bezahlterminal) verbunden wird, welches eine Anwendung zur Steuerung von Transaktionen ausführen kann. Bei den Transaktionen handelt es sich in der Regel um Finanztransaktionen, wie der bargeldlosen Zahlung/Überweisung von Geld. In der Regel sind solche Wirtsysteme mit einem Hintergrundsystem einer Bank oder einem anderen Server verbunden, welches oder welcher in der Lage ist, die Transaktionsdaten entgegenzunehmen und zu verarbeiten. Zuvor sind auf dem PC, dem Smartphone oder der Bezahlstation, und abhängig von den Möglichkeiten der jeweiligen Betriebssystemumgebung, für die erfindungsgemäße Vorrichtung spezifische Programminformationen gespeichert oder dafür geeignete Treiber installiert worden. Dass beim Wirtsystem die Netzwerkschnittstellen NFC oder Bluetooth aktiv sind und der standardmäßige Erkennungsmechanismus für externe Chipkartenleser aktiviert ist, wird vorausgesetzt.

Aus der Sicht der vorliegenden Erfindung ist es für die Erfüllung der Hauptaufgabe beim Etablieren der Kommunikation zwischen Wirtsystem und der erfindungsgemäßen Vorrichtung unerheblich, ob diese über Bluetooth oder NFC stattfindet, oder ob das Wirtsystem bereits einen angeschlossenen externen oder integrierten Chipkartenleser besitzt. Wird die erfindungsgemäße Vorrichtung beispielsweise über NFC als externe Chipkarte (Card Emulation) verwendet, so kann dennoch, wenn dies benötigt wird, der Chipkartenleser der erfindungsgemäßen Vorrichtung verwendet werden und nicht der Chipkartenleser des Wirtsystems. Denn nur dieser gilt aus verständlichen Gründen als vertrauenswürdig und nicht beispielsweise die Umgebung eines Android-Smartphones.

Der zweite Schritt 200 des erfindungsgemäßen Verfahren besteht darin, während einer Transaktionsabwicklung beispielsweise innerhalb einer Banking-Anwendung - unabhängig davon, ob diese browser-basierend als Webanwendung oder als Client-Anwendung auf dem Wirtsystem installiert ist -, dem Nutzer die von ihm auf dem Bildschirm des Wirtsystems eingegebenen Daten (z.B. Überweisungsbetrag, Empfängerkonto) zur Sicherstellung der Authentizität erneut in der sicheren Umgebung der erfindungsgemäßen Vorrichtung anzuzeigen und diese von ihm dort explizit bestätigen zu lassen. Im Einzelnen werden diese Daten zunächst durch die Anwendung in geeigneter Weise aufbereitet. Anschließend werden sie an die/eine erfindungsgemäße Vorrichtung über dafür vorgesehenen Programmkomponenten übertragen. Im dritten Schritt 300 des Verfahrens werden diese auf der vertrauenswürdigen Display-Einheit 4 manipulationssicher angezeigt, vom Benutzer über die sichere Tastatur-Einheit 5 bestätigt und unter Verwendung des in der Chipkarte enthaltenen und dem jeweiligen Nutzer eindeutig zugeordneten Schlüsselmaterials, das sicher im Crypto-Micro-Controller **2** abgelegt ist, signiert. Der Ablauf dieses Vorgangs ist bekannt oder standardisiert. Die Anwendung kommuniziert mit der erwarteten Chipkarte, welche in einem erwarteten sicheren Chipkartenleser steckt. Dies auch dann, wenn die tatsächliche kontaktlose Datenübertragung, wie im Falle von NFC, auf Basis eines anderen vorhandenen und unsicheren Chipkartenlesers stattfindet. Diese so auf der erfindungsgemäßen Vorrichtung signierten Daten empfängt sodann die Anwendung auf dem Wirtsystem im letzten und vierten Schritt 400 des erfindungsgemäßen Verfahrens und überträgt sodann diese gegebenenfalls an einen dafür vorgesehenen Empfänger. Dieser Ablauf kann während einer Transaktion bzw. Sitzung je nach Geschäftsvorfall gänzlich oder partiell mehrfach wiederholt werden. Geeignet ist die erfindungsgemäße Vorrichtung auch für Verschlüsselungsoperationen, da sie im Schlüsselspeicher auch Schlüssel für eine Verschlüsselung der Daten halten kann.

Die erfindungsgemäßen Verfahren und die erfindungsgemäße Vorrichtung erfüllen höchste Sicherheitsansprüche. Die PIN-Eingabe des Besitzers der Chipkarte erfolgt je nach Geschäftsvorfall bei Bedarf oder Verlangen auf der sicheren erfindungsgemäßen Vorrichtung und wird außerhalb jeglicher potentieller Gefahren eines Wirtsystems verifiziert. Die zu signierenden Daten werden dabei auf einer sicheren Anzeige außerhalb und frei von Manipulationsmöglichkeiten visualisiert und vom Nutzer bestätigt. Die Tatsache, dass diese Daten der erfindungsgemäßen Vorrichtung von einer gefährdeten Umgebung wie der eines Wirtsystems stammen, ist nicht weiter kritisch. Die mit dem auf der Chipkarte befindlichen Schlüsselmaterial signierten Daten können nur von einem bestimmten Empfänger dieser signierten Daten sinnvoll und gültig verwendet werden. Die Erklärung dafür liefern die verwendeten kryptographischen Systeme. Asymmetrische oder symmetrische Kryptosysteme verwenden für das Signieren von Daten Schlüssel, die sich in der Regel im Crypto-Micro-Controller **2** der erfindungsgemäßen Chipkarte befinden. Diese verlassen nie den Crypto-Micro-Controller und seinen sicheren Speicher und sind nicht vom Wirtsystem erreichbar oder in sonstiger Weise zugänglich. Jede kryptographische Signaturoperation erfordert eine "Gegenoperation". Wenn beispielsweise im Crypto-Micro-Controller **2** der erfindungsgemäßen Chipkarte auf Basis eines asymmetrischen Kryptosystems eine Signatur erzeugt wurde, so wurde dafür ein privater Schlüssel der Chipkarte verwendet. Die Verifikation dieses Schlüssels findet beim bestimmten Empfänger statt, der eine so signierte Nachricht bekommt. Ähnliches gilt auch bei Verwendung eines symmetrischen Kryptosystems. Nur Nutzer und Empfänger können prinzipiell den geheimen Schlüssel besitzen, mit dem eine Nachricht signiert wurde.

Die Vorteile der erfindungsgemäßen Anordnung und des erfindungsgemäßen Verfahrens liegen einerseits in der Tatsache, dass moderne mobile Endgeräte mit ihren integrierten kontaktlosen Kommunikationsschnittstellen (Bluetooth, NFC) optimal genutzt werden können, um dem Nutzer ein Höchstmaß an Sicherheit, Bedienbarkeit und Komfort anzubieten, wobei andererseits für die Herausgeber (z.B. Kreditinstitute) enorme Kosteneinsparungen durch den Wegfall eigener Chipkartenleser zu erwarten sind. Weitere Vorteile bestehen darin, dass die erfindungsgemäße Vorrichtung ein hohes Maß an Rückwärtskompatibilität bietet, und zwar weil sie über dieselbe Vorrichtung wie eine herkömmliche kontaktlose ISO-14443-Chipkarten verwendet werden kann, aber sich auch über den Chipkartenleser in der erfindungsgemäßen Uhr auch als eingesteckte kontaktbehaftete ISO-Chipkarte melden wird. Dahingegen ist die Verwendung von z.B. in Smartphones integrierten Chipkartenlesern aus Vertrauensgründen nicht zu empfehlen.

Im Einzelnen betrifft die Erfindung eine Uhr mit Uhrenschaltung zur Anzeige der Zeitdaten und mit erweiterter Funktionalität zur Absicherung elektronischer Transaktion, umfassend eine Energiequelle, eine Anzeige, eine Tastatur, eine Netzwerkschnittstelle, eine Verarbeitungseinheit, einen Micro-Controller und einen Speicherbereich für Signaturinformationen und/oder Schlüsselmaterial, gekennzeichnet durch eine Einrichtung, die es der Uhr erlaubt, sich mit einem Wirtsystem über die Netzwerkschnittstelle zu verbinden, um sich gegenüber diesem Wirtsystem als integriertes Kartenlesegerät mit eingeschobener Chipkarte darzustellen, wobei die Transaktionsdaten zu der Uhr über die Netzwerkschnittstelle vom Wirtsystem empfangen werden, um auf dem Display dargestellt zu werden, um durch eine Tastatureingabe auf der Tastatur diese Transaktionsdaten bestätigen zu können, um diese Transaktionsdaten mit der Signatur zu versehen, und um diese dann an den Wirtsystem zu senden. In einer vorteilhaften Ausführungsform wird die Uhr über ihre Netzwerkschnittstelle mit dem Wirtsystem verbunden und teilt diesem abhängig von der Kommunikationsart mit, welches Gerät sie ist. Erfolgt diese Kommunikationsverbindung über Bluetooth, zeigt der Prozessor der Uhr ein standardmäßiges Chipkartenlesegerät mit eingeschobener Chipkarte an, die dem Wirtsystem über die Netzwerkschnittstelle zur Verfügung stehen. Hierbei erkennt der Gerätetreiber des Hostgerätes ein zulässiges Chipkartenlesegerät und initialisiert entsprechend die Verbindung. Erfolgt die Kommunikation über NFC, so kommt die Verbindung in einem der bei NFC geltenden und spezifizierten Modi zustande. Handelt es sich bei der NFC-Schnittstelle des Wirtsystems um einen NFC-Chipkartenleser, so baut der NFC-Baustein der Uhr mit dem NFC-Chipkartenleser des Wirtsystems die Verbindung auf und zeigt dabei eine Smartcard an (NFC-Modus "Card Emulation"). Handelt es sich bei der NFC-Schnittstelle des Wirtsystems um eine NFC-Chipkarte, so baut der NFC-Baustein der Uhr mit der NFC-Chipkarte des Wirtsystems die Verbindung auf und zeigt dabei einen NFC-Chipkartenleser an (NFC-Modus "Read/Write"). Ferner gibt es noch den Modus peer-to-peer, bei dem beide Seiten (Netzwerkschnittstelle des Wirtsystems und NFC-Schnittstelle der Uhr) als gleichberechtigte Kommunikationsinstanzen auftreten, und wo die eine sendet und die andere empfängt. In allen drei NFC-Kommunikationsverbindungen handelt es sich um eine reine Übertragungsverbindung für Transaktionsdaten, welche im Display der Einrichtung manipulationssicher angezeigt werden, über die Tastatur der Einrichtung manipulationssicher bestätigt werden können, und mit den Signaturinformationen im Crypto-Micro-Controller signiert werden. Unabhängig davon, welche Art von Chipkartenleser im Wirtsystem nach dem Aufbau der Netzwerkverbindung initialisiert und bekannt wird, steht für alle sicherheitsrelevanten Anwendungen im Wirtsystem auch die Information bereit, dass eine Smartcard über einen zulässigen Chipkartenleser mit Anzeige und Tastatur erreicht werden kann. Im Fall Bluetooth geschieht dies über die installierten Chipkartenleser-Treiber für die Einrichtung. Im Falle NFC-Card-Emulation erfolgt dies über den NFC-Chipkartenlesertreiber im Wirtsystem, indem die Anwendung des Wirtsystems zuvor die Befehle für den Chipkartenleser der Einrichtung als Daten innerhalb von Befehlen für die Smartcard der Einrichtung bereitstellt, welche wiederum von der NFC-Card-Emulation der Einrichtung an die Verarbeitungseinheit der Einrichtung übergeben und dort ordnungsgemäß ausgeführt werden. In ähnlicher Weise werden Befehle für den Chipkartenleser der Einrichtung auch dann verpackt, wenn im Falle Bluetooth die vorinstallierten oder allgemeinen Chipkartenlesertreiber im Wirtsystem nicht in der Lage sind, die Chipkartenleserfunktionen der Einrichtung zu erkennen. Bei den anderen Arten der Kommunikationsverbindung handelt es sich um Spezialfälle, die weiter unten beschrieben werden. Das manipulationssichere Anzeigen, die sichere Verwendung der Tastatur, und der Signaturvorgang alles ohne externes Eingreifen in der Einrichtung kann ähnlich der Firewall-Technik des Secoder-Chipkartenlesers [1] erfolgen.

In einer weiteren Ausführungsform kann die Uhr als Armbanduhr, als Halskette/Taschenuhr, mit Kette in der Westentasche, und/oder als Schlüsselanhänger getragen werden.

In einer weiteren Ausführungsform ist die Uhr mit physikalische Funkschaltungen ausgestattet, die einen Betrieb in Standard kontaktlosen Kartenlesegeräten erlauben, um eine Transaktion durch zuführen.

In einer weiteren Ausführungsform ist Uhr wasserdicht oder wasserabweisend damit auch weitere Aktivitäten der Person, die sie trägt möglich sein können.

In einer weiteren Ausführungsform enthält die Uhr eine oder mehrere Smartcards, die über die dafür vorgesehen Leseeinheit kontaktbehaftet oder kontaktlos gelesen werden.

In einer weiteren Ausführungsform kann die Uhr mehrere Typen von Chip-Kartenlesegeräten emulieren.

In einer weiteren Ausführungsform sind die Eingaben an der Uhr über mechanische oder Folien-Tasten, Sprachsteuerung, Touch Panel, Direct Pad-Technologie (D-pad) möglich.

In einer weiteren Ausführungsform wird die Uhrenfunktion der Uhr funkgesteuert synchronisiert.

In einer weiteren Ausführungsform ist die Netzwerkschnittstelle der Uhr vorzugsweise als USB-, und/oder Bluetooth Low Energie bzw. Bluetooth- und/oder NFC-Schnittstelle etc. ausgebildet.

In einer weiteren Ausführungsform ist die Uhr durch einen sicheren Speicherbereich, der vorzugsweise durch einen Crypto-Micro-Controller verwaltet wird oder in einem solchen integriert ist, gekennzeichnet. Micro-Controller für kryptographische Operationen werden bereits so hergestellt, dass sie sichere Speicherbausteine verwenden und in der Regel integrieren sowie deren Inhalte verwalten und als sehr vertrauenswürdig gelten. Sie führen in ihrer spezifischen Betriebssystemumgebung Anwendungen und Crypto-Operationen aus.

In einer weiteren Ausführungsform sind im Speicherbereich Signaturinformationen und Schlüsselmaterial insbesondere Signaturschlüssel abgelegt, um die Transaktionsdaten zu signieren, die Identität des Nutzers der Chipkarte zu prüfen oder die Identität des Chip-Kartenlesers gegenüber einer Anwendung des Wirtsystems auszuweisen. Das Schlüssel- und Signaturmaterial, welches üblicherweise bei der Herausgabe einer Smartcard oder Programmierung der in der Uhr integrierten Smartcard oder nachträglich im Speicherbereich abgelegt wird, wird vom Crypto-Micro-Controller verwendet, um die angezeigten und über die Tastatur bestätigten Transaktionsdaten zu signieren. Mit der Möglichkeit der sicheren Eingabe einer persönlichen Identifikationsnummer über die Tastatur der Einrichtung und ihrer Verifikation vom Crypto-Micro-Controller, kann der Nutzer der Chipkarte identifiziert werden. Schließlich ist es auch möglich, die Identität des Chipkartenlesers oder einzelner Bausteine zu prüfen, wenn eine Anwendung dies erfordert.

In einer weiteren Ausführungsform ist das Wirtssystem ein Kassensystem oder ein PC-System, Smartphone, Geldautomat oder Bezahlterminal. In all diesen Computersystemen ist es erforderlich oder auch zwingend notwendig, sicherheitsrelevante Anwendungen laufen zu lassen, die für ein hohes Sicherheitsniveau eine Chipkarte über einen angeschlossenen Chipkartenleser voraussetzen.

In einer weiteren Ausführungsform ist die Uhr ausgebildet, um in Abhängigkeit der Netzwerkverbindung sich gegenüber dem Wirtssystem als Chip-Kartenlesegerät oder während des Etablierens der Kommunikationsverbindung mit dem Wirtssystem sich als eine Smartcard darzustellen, um sich jedoch einer Anwendung des Wirtsystems als Chipkartenleser mit eingeschobener Chipkarte darzustellen. Es ist über die Tastatur und das Display der Einrichtung möglich, festzulegen oder zu konfigurieren, welche Kommunikationsverbindungen über die Netzwerkschnittstelle der Einrichtung erlaubt oder möglich sein sollen. Wie weiter oben erläutert, kann immer in der jeweiligen Kommunikationsverbindung das Ziel der Einrichtung erfüllt werden, die Chipkartenfunktionen mit den integrierten vertrauenswürdigen Chipkartenleserfunktionen zu verwenden.

In einer weiteren Ausführungsform werden dem Nutzer die von ihm auf dem Bildschirm des Wirtsystems eingegebenen Daten zur Sicherstellung der Authentizität erneut anzeigt, und diese sind vom Nutzer dort explizit bestätigbar. Während der Vorbereitung einer Transaktion mit einer Anwendung auf dem Wirtsystem, wird der Nutzer aufgefordert, Daten einzugeben. Um sicherzustellen, dass bei der weiteren bzw. späteren Verwendung dieser Daten, diese nicht manipuliert worden sind, werden sie an die Uhr gesendet, um sie dort zu signieren. Vor der Signatur werden diese dem Benutzer noch einmal angezeigt. Sowohl die Anzeige als auch die Tastatur der Einrichtung gelten als vertrauenswürdig, weil die Einrichtung hierfür bekannte Verfahren nutzt, wie beispielsweise eine Firewall. Ähnliche Mechanismen werden heute beispielsweise auch bei Verwendung eines Secoder-Chipkartenlesers mit eingeschobener Chipkarte verwendet.

In einer weiteren Ausführungsform werden von der Uhr die Daten mit Schlüsselmaterial signiert, so dass die Daten nur von einem bestimmten Empfänger dieser signierten Daten sinnvoll und gültig verwendbar sind. Dies ermöglichen die asymmetrischen oder symmetrischen Kryptosysteme, welche bei der Konzeption und Verteilung des Schlüsselmaterials dafür sorgen, dass nur diejenigen Stellen (Personen oder Maschinen), die behandelten Daten richtig und sinnvoll verwenden können, welche über die richtigen Schlüsselkomponenten verfügen,

In einer weiteren Ausführungsform laufen auf der Verarbeitungseinheit weitere Anwendungen, umfassend einen funktionalen Teil eines oder mehrerer Anwendungsbereiche, wie Home-, Mobile- oder Online Banking, aber auch funktionale Blöcke der Anwendungsbereiche - VPN-Client, Email-Client, elektronische Pässe und Ausweise, oder auch Zeiterfassung und Türöffnung, welche vom Nutzer erwarten, dass er seine Uhr für Authentifizierungszwecke oder elektronische Signaturen einsetzt. Auf der Verarbeitungseinheit der Einrichtung können mehrere Anwendungen laufen, die vom jeweiligen Anwendungsgebiet bestimmt sind. Das Anwendungsgebiet und die Anwendung auf der Verarbeitungseinheit bestimmen die jeweiligen Informationen, welche während der Transaktion dem Nutzer angezeigt werden.

In einer weiteren Ausführungsform enthält die Uhr mehrere Crypto-Micro-Controller und/oder es werden mehrere Typen von Chip-Kartenlesegeräten emuliert. Dies ist nötig, um ein möglichst breites Spektrum an Anwendungen bedienen zu können. Möglich wird eine solche Ausführungsform durch die vorgeschaltete Verarbeitungseinheit, da sie abhängig von der Anwendung und dem Wirtsystem steuern kann, welcher Crypto-Micro-Controller benötigt wird und/oder welche Art Chipkartenlesertyp simuliert werden soll.

Ferner wird vorzugsweise eine Energiequelle zur Stromversorgung bereitgestellt, wobei diese über NFC-Induktion aufladbar, oder auch ein Solarmodul sein kann. Unterschiedliche Anwendungen auf der Uhr und unterschiedliche kryptographische Operationen oder Display-Anzeigen haben unterschiedlichen Strombedarf. Es besteht zwar die Möglichkeit, über die NFC-Induktion Strom zu beziehen, dieser wird jedoch nicht in allen Fällen ausreichend sein. Um die Einrichtung in Hinblick auf den Strombedarf möglichst lange verwenden zu können, sollte die Energiequelle aufladbar sein. Dies sowohl über USB, die NFC-Induktion als auch als Solarmodul.

### [Literaturverweise]

[1] Deutsche Kreditwirtschaft (DK) Secoder, Connected mode, Reader Applications", Version 2.2
[2] Wikipedia, Bluetooth, http://de.wikipedia.org/wiki/Bluetooth#Aktueller Standard: Bluetooth 4.0
[3] Wikipedia, NFC, http://de.wikipedia.org/wiki/Near Field Communication
[4] Wikipedia, Chipkartenleser, Kartenlese Chip-Kartenlesergerät, http://de.wikipedia.org/wiki/Kartenleseger%C3%A4t
[5] Wikipedia, PC/SC Workgroup, www.pcscworkgroup.com/
[6] Internationale Norm ISO/IEC 7810 für die Definition der ID-Kartenformate für ID-1, ID-2, ID-3 und ID-000 - definiert.

## Patentansprüche

1. Uhr mit Uhrenschaltung zur Anzeige der Zeitdaten, umfassend eine Energiequelle, eine Anzeige, eine Tastatur, eine Netzwerkschnittstelle, eine Verarbeitungseinheit, einen Micro-Controller und einen Speicherbereich für Signaturinformationen und/oder Schlüsselmaterial, **gekennzeichnet durch** eine Einrichtung, die es der Uhr erlaubt, sich mit einem Wirtsystem über die Netzwerkschnittstelle zu verbinden, um sich gegenüber diesem Wirtsystem als integriertes Kartenlesegerät mit eingeschobener Chipkarte darzustellen, wobei die Transaktionsdaten zu der Uhr über die Netzwerkschnittstelle vom Wirtsystem empfangen werden, um auf dem Display dargestellt zu werden, um **durch** eine Tastatureingabe auf der Tastatur diese Transaktionsdaten bestätigen zu können, um diese Transaktionsdaten mit der Signatur zu versehen und um diese dann an das Wirksystem zu senden.

2. Eine Uhr nach dem vorhergehenden Anspruch, **gekennzeichnet durch** den Formfaktor und die Eigenschaft als eine Armbanduhr, als Halskette, als Taschenuhr mit Kette, und/oder als Schlüsselanhänger getragen zu werden.

3. Uhr gekennzeichnet nach einem oder mehreren der vorhergehenden Ansprüche, **gekennzeichnet durch** physikalische Funkschaltungen, die einen Betrieb in Standard kontaktlosen Kartenlesegeräten erlaubt, um eine Transaktion **durch** zuführen.

4. Uhr nach einem oder mehreren der vorhergehenden Ansprüche **dadurch gekennzeichnet, dass** diese wasserdicht oder wasserabweisend konstruiert ist.

5. Uhr nach einem oder mehreren der vorhergehenden Ansprüche, wobei eine oder mehrere Chipkarten über die dafür vorgesehen Leseeinheit kontaktbehaftet oder kontaktlos lesbar sind.

6. Uhr nach einem oder mehreren der vorhergehenden Ansprüche, wobei mehrere Typen von Chip-Kartenlesegeräten emulierbar sind.

7. Uhr nach einem oder mehreren der vorhergehenden Ansprüche, **dadurch gekennzeichnet, dass** die Eingabeeinheit durch mechanische oder Folien-Tasten, Sprachsteuerung, Touch Panel, Direct Pad-Technologie (D-pad) ausgestaltet ist.

8. Uhr gekennzeichnet nach einem oder mehreren der vorhergehenden Ansprüche, **gekennzeichnet durch** eine Netzwerkschnittstelle, die vorzugsweise als USB-, und/oder Bluetooth Low Energie bzw. Bluetooth- und/oder NFC-Schnittstelle, und/oder WLAN ausgebildet ist.

9. Uhr gekennzeichnet nach einem oder mehreren der vorhergehenden Ansprüche, **gekennzeichnet durch** einen sicheren Speicherbereich, der vorzugsweise **durch** mindestens einen Crypto-Micro-Kontroller verwaltet wird oder in einem solchen integriert ist und/oder
wobei im Speicherbereich Signaturinformationen und Schlüsselmaterial insbesondere Signaturschlüssel abgelegt sind, um die Transaktionsdaten zu signieren, die Identität des Nutzers der Chipkarte zu prüfen oder die Identität des Chip-Kartenlesers gegenüber einer Anwendung des Wirtsystems auszuweisen
und/oder
wobei die mit Schlüsselmaterial signierten Daten nur von einem bestimmten Empfänger dieser signierten Daten sinnvoll und gültig verwendbar sind.

10. Uhr nach einem oder mehreren der vorhergehenden Ansprüche, **gekennzeichnet durch** einen integrierten Flachbildschirm, der so ausgebildet ist, dass die physikalischen Dimensionen, die einer Uhr entsprechen und/oder den berührungsempfindlichen Bildschirm bzw. ein Touch Panel integriert, wobei dies vorzugsweise auf eine Armbanduhr ausgerichtet ist.

11. Uhr nach einem oder mehreren der vorhergehenden Ansprüche, wobei das Wirtssystem ein Kassensystem oder ein PC-System, Smartphone, Tablet-Computer, Geldautomat oder Bezahlterminal ist.

12. Uhr nach einem oder mehreren der vorhergehenden Ansprüche, ausgebildet, um in Abhängigkeit der Netzwerkverbindung sich gegenüber dem Wirtssystem als Chip-Kartenlesegerät oder während des Etablierens der Kommunikationsverbindung mit dem Wirtssystem sich als eine Chipkarte darzustellen, um sich jedoch einer Anwendung des Wirtsystems als Chipkartenleser mit eingeschobener Chipkarte darzustellen.

13. Uhr nach einem oder mehreren der vorhergehenden Ansprüche, wobei dem Nutzer die von ihm auf dem Bildschirm des Wirtsystems eingegebenen Daten zur Sicherstellung der Authentizität erneut anzeigbar sind, und diese vom Nutzer dort explizit bestätigbar sind.

14. Uhr nach einem oder mehreren der vorhergehenden Ansprüche, wobei auf der Verarbeitungseinheit weitere Anwendungen laufen, umfassend einen funktionalen Teil eines oder mehrerer Anwendungsbereiche wie Home-, Mobile- oder Online Banking, aber auch funktionale Blöcke der Anwendungsbereiche - VPN-Client, Email-Client, elektronische Pässe und Ausweise, oder auch Zeiterfassung und Türöffnung, welche vom Nutzer erwarten, dass er seine Chipkarte für Authentifizierungszwecke oder elektronische Signaturen einsetzt.

15. Uhr nach einem oder mehreren der vorhergehenden Ansprüche, wobei eine Energiequelle zur Stromversorgung bereitgestellt wird, wobei diese über USB-Standard, NFC Induktion aufladbar sein kann, oder auch ein Solarmodul sein kann.
